# EUROPEAN PATENT APPLICATION

(11) **EP 2 109 314 A1**
(43) Date of publication of application: **14.10.2009**
(21) Application number: 08290363.4
(22) Date of filing: 11.04.2008
(51) Int. Cl.: H04N 7/16

(54) **Method for protection of keys exchanged between a smartcard and a terminal**

(71) Applicant: Gemalto SA, 92190 Meudon (FR)
(72) Inventor: Seif, Jacques, 92197 Meudon Cedex (FR)
(74) Representative: Cassagne, Philippe M.J.

(57) **Abstract**

The present invention relates to a method for the protection of keys sent from a secure token (USIM) to a terminal (ME), said keys being traffic keys (MTK) used to decrypt a portion of content received from a content delivery center (BM-SC), said traffic keys being sent from said content delivery center (BM-SC) to the secure token (USIM) via a terminal (ME) using the MIKEY protocol defined by IETF RFC 3830. The method further comprises the steps of (a) - decrypting in the secure token encrypted traffic keys received from content delivery center thereby producing traffic keys, and decryption by the terminal (ME) of the content received from the content delivery center (BM-SC) by using said traffic keys, characterized in that said method further comprises the step of (b) - encrypting in the secure token, using the MIKEY protocol defined by IETF RFC 4738, said traffic keys, and decryption by the terminal of said IETF RFC 3830-protocol-encrypted traffic keys.

## Description

### TECHNICAL FIELD

This invention relates to a method for protecting keys exchanged between a smartcard and a terminal. The invention relates to a method for a service provider to ensure that a subscriber cannot conspire to circumvent the security solution to distribute so-called traffic service keys to malicious users who will get free access to a service for which a subscription and/or a payment is required.

### BACKGROUND

It is typical for mobile TV services systems to encrypt the distributed content to be able to protect and charge the access to this content. The content, e.g. a TV program, can be distributed in broadcast, multicast or unicast modes or any combination. In parallel to the encrypted content distribution, it is also common in such systems to distribute traffic keys to valid subscribers in order to provide them access to the service content. A traffic key is used for the descrambling/decryption of a portion of the distributed content and typically changes after a short period. The service provider needs obviously to also protect these traffic keys to valid subscribers. Otherwise, an attacker can simply eavesdrop on traffic key distribution and get access to the encrypted and protected content.
Although entities such as service providers and subscribers are used here in association with key distribution functions, those skilled in the art would readily appreciate that these entities do not by themselves carry out key distribution but equipment associated therewith that does. For the service providers, the equipment involved includes a server (e.g. BM-SC). For the subscriber, the equipment involved includes an authentication token, such as a subscriber identity module (SIM or USIM), supported in a mobile equipment or terminal (hereinafter "ME").

For performances and technical limitations reasons, it is very difficult to the service provider to send traffic keys to millions of subscribers individually as these traffic keys are frequently changed for security reasons (e.g. they are changed each 30 seconds to prevent an attacker who get one traffic key to get access to the service for a long time). Therefore, in such systems, usually the traffic key distribution is usually protected by a service key (e.g. MSK key in MBMS systems or SEK/PEK in OMA BCAST systems) to protect and simplify the traffic key delivery. The service key is less frequently updated than the traffic key (e.g. one per week or month). Therefore, it is possible to send individually such key to the subscriber. But the service key is a key asset for the service provider as compromising this key can result in large scale free access to the service for long periods of time. Therefore, the service provider usually deliver and securely store the service key to the authentication token such as the USIM smartcard. The authentication token, which is a tamper resistant hardware device protects the storage of the service key and prevent any access to this key from outside the authentication token. The service key in the authentication token is then used by the server and the authentication token to secure (e.g. by encryption and integrity protection) the delivery of the traffic keys to the authentication token which then send them to the ME. The ME, which receives the traffic key from the authentication token and the encrypted broadcasted content, decrypt the content and render it to the user.
In order to circumvent the security solution, a valid subscriber can spy on the interface between the authentication token and the ME. This raises a serious fraud problem for the service provider. An attacker having a legitimate authentication token can save the traffic keys exchanged between the authentication token and the ME and then distribute these keys (e.g. over the internet) to malicious subscribers to get free access to the service. Furthermore, some content are sold to be viewed once. The attacker may use the saved keys to replay the content indefinitely.
It is thus desirable for the service provider to be able to protect the traffic key exchange between the authentication token and the ME. It is also desirable for the service provider to minimize the complexity and development cost of such solution.

Other aspects, features and advantages of the present invention are included in the following description of a representative embodiment, which description should be taken in conjunction with the accompanying drawing illustrating a schematic block diagram of network elements embodying the invention.

### DESCRIPTION OF THE EMBODIEMENT :

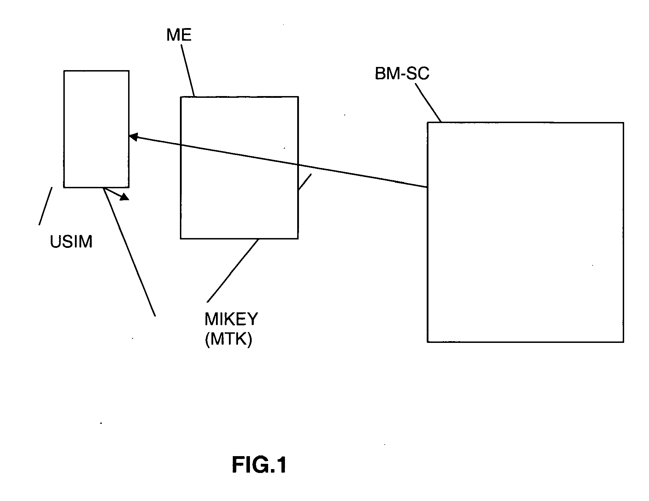

As shown in the single Figure 1, its is proposed according to the invention to reuse the MIKEY protocol that is intended to secure key distribution over a network in order to secure keys exchange between the smartcard and a terminal over their local interface.

The traffic keys (in a encrypted form) needed to decrypt/descramble the content are generated by the broadcasting or diffusion center, or more generally a content delivery center, BM-SC and are sent to the terminal ME. These traffic keys are encrypted by using the so-called MIKEY Protocol defined for the real-time transmission/exchange of keys.
These encrypted traffic keys are sent jointly with the encrypted (or scrambled) content. These encrypted traffic keys are received by the terminal ME and sent to the secure token USIM. The secure token (for example a smartcard) decrypts the encrypted traffic keys received from the center through the terminal ME and sends the decrypted traffic keys, after encrypting them, to the terminal ME. As mentioned previously, these traffic keys are produced at a given timing rate. For example an encrypted traffic key is decrypted every 30 seconds by the card to be used by the terminal ME to decrypt/descramble the received content for a next time period of 30 seconds, and so on. So the encrypted traffic keys encrypted by the MIKEY protocol as received from the center through the terminal ME are decrypted by the secure token USIM and then re-encrypted - using the pre-shared scheme of the MIKEY Protocol - by the secure token to be sent to the terminal ME.

Thus according to the invention, the decrypted traffic keys produced by the token USIM are thus sent to the terminal ME in an encrypted form, after being re-encrypted using the MIKEY protocol. The terminal ME decrypts them to recover successive traffic keys in clear format to decrypt the content received from the center BM-SC.

MIKEY Protocol is defined by the Internet Engineering Task Force (IETF) in Document RFC 3830, such Document being hereby fully incorporated in the present application by this reference.
MIKEY Protocol defines three different methods of transporting/establishing a TGK key with the use of a pre-shared key, public-key encryption, and Diffie-Hellman (DH) key exchange.

Advantageously, the pre-shared key scheme of MIKEY is used for the transportation of traffic keys between the secure token and the terminal ME.

So, in order to protect the sensitive data (i.e. traffic keys) that are exchanged on the local interface between the authentication token and the ME (or an application on the ME), the authentication token will use existing secure key distribution functions such as the MIKEY protocol to protect the traffic key exchange between the ME and the authentication token. Instead of sending the traffic key in clear to the terminal over the local interface, the smartcard will send the traffic key in an encrypted manner to the terminal (e.g. by means of a MIKEY message).

The MIKEY message will be protected using a local key that is shared between the ME and the authentication token. Such key may be derived using Generic Bootstrapping Architecture (GBA) based methods.
The condition to protect the traffic key (e.g. sending the traffic keys using MIKEY instead of sending the key in clear) may be configured on the smartcard by means of local policy or may be securely sent over the network (e.g. the network may indicate to the smartcard in a delivery message to send the traffic keys to terminals in a protected manner only).

Thus it is possible to protect only sensitive keys that are exchanged between the smartcard and the terminal, whereas with existing solutions like the Secure Authentication Channel protects defined in ETSI TS 102 484 all the traffic between the smartcard and the terminal (or smartcard application and terminal application) will be protected. Securing the whole traffic will generate lower performances issues due to the limited resources available in a smartcard compared to another processing devices and potentially incompatibilities with real time requirements needed for such applications, and will be much more difficult to implement and test and will hamper interoperability.

It is also possible by implementing the present invention to use a protocol that is already required to be supported instead of requiring the support of a completely new specification.

Advantageously, the content delivery center instructs in a protected manner the secure token.
The operation of the secure token may be based upon a secured indication from the server or is based on local policy in the secure token.
The secure token and the terminal advantageously uses the MIKEY protocol together with a local key that is shared between a secure token and a terminal.

## Claims

**1.** A method for the protection of keys sent from a secure token (USIM) to a terminal (ME), said keys being traffic keys (MTK) used to decrypt a portion of content received from a content delivery center (BM-SC), said traffic keys being sent from said content delivery center (BM-SC) to the secure token (USIM) via a terminal (ME) using the MIKEY protocol defined by IETF RFC 3830, said method comprising the steps of (a) - decrypting in the secure token encrypted traffic keys received from content delivery center thereby producing traffic keys, and decryption by the terminal (ME) of the content received from the content delivery center (BM-SC) by using said traffic keys, **characterized in that** said method further comprises the step of (b) - encrypting in the secure token, using the MIKEY protocol defined by IETF RFC 4738, said traffic keys, and decryption by the terminal of said IETF RFC 3830-protocol-encrypted traffic keys.

**2.** A method according to claim 1, wherein the encryption in the secure token of the traffic keys uses the pre-shared key scheme of the MIKEY protocol defined by IETF RFC 4738.

**2.** Terminal for carrying out the method of claim 1.

**3.** Secure token, for example smartcard, for carrying out the method of claim 1.

**4.** Server for instructing in a protected manner the secure token for carrying out the method of claim 1.

**5.** Secure token, for example smartcard, for carrying out the method of claim 1 based on a secured indication from the server.

**6.** Secure token, for example smartcard, for carrying out the method of claim 1 based on local policy in the secure token.

**7.** Secure token, for using the MIKEY protocol together with a local key that is shared between a secure token and a terminal.

**8.** Terminal, for using the MIKEY protocol together with a local key that is shared between a secure token and a terminal.
